# EUROPEAN PATENT APPLICATION

(11) **EP 1 176 535 A2**
(43) Date of publication of application: **30.01.2002**
(21) Application number: 01306386.2
(22) Date of filing: 25.07.2001
(51) Int. Cl.: G06F 17/60

(54) **Communicating apparatus and communicating method**

(30) Priority: 26.07.2000 JP 2000225324; 11.04.2001 JP 2001112415
(71) Applicant: CANON KABUSHIKI KAISHA, Tokyo (JP)
(72) Inventor: Sugawara, Kazuhiro, Ohta-ku, Tokyo (JP)
(74) Representative: Beresford, Keith Denis Lewis

(57) **Abstract**

According to a communicating apparatus of the invention, when E-mail is received from an E-mail server, whether a size of E-mail is larger than the maximum reception size or not is discriminated, and if a discrimination result is YES, an instruction to delete the E-mail is sent to the E-mail server, and the fact that the E-mail has been deleted is stored into a communication history.

## Description

### BACKGROUND OF THE INVENTION

### Field of the Invention

The invention relates to a communicating apparatus and, more particularly, to a communicating apparatus having an E-mail function.

### Related Background Art

Hitherto, in an Internet facsimile apparatus which can be connected to a LAN (Local Area Network), a reception result of E-mail is left in a mail server, a message indicative of a reception failure is merely transmitted to a transmitting source, a PC (personal computer) of a receiver, an administrator of the facsimile apparatus, or the like by mail or the like, and a communication result report or the like is not outputted.

However, in the above prior art, in a manner similar to the ordinary facsimile apparatus, there is a problem such that unless the reception result is not informed by the communication result report, the user is not aware of the fact that the facsimile apparatus is left in a memory-full state where no data cannot be received and he cannot grasp how many unreceivable mail remains in the mail server.

### SUMMARY OF THE INVENTION

The invention is made to solve the foregoing problems which the prior art has and it is a concern of the invention to provide a communicating apparatus and a communicating method which can prevent a situation such that the user is not aware of the fact that a facsimile apparatus is left in a memory-full state where no data cannot be received and he cannot grasp how many unreceivable mail remains in the mail server.

According to the present invention, there is provided a communicating apparatus in which when E-mail is received from an E-mail server, whether a size of E-mail is larger than the maximum reception size or not is discriminated, if a discrimination result is YES, an instruction to delete the E-mail is transmitted to the E-mail server, and the fact that the E-mail has been deleted is stored in a communication history.

The above and other advantages and features of the present invention will become apparent from the following detailed description and the appended claims with reference to the accompanying drawings.

### BRIEF DESCRIPTION OF THE DRAWINGS

Fig. 1 is a block diagram showing a schematic construction of an information processing apparatus (Internet facsimile apparatus) according to the first embodiment of the invention;
Fig. 2 is a flowchart showing a flow of the operation of a mail reception (1) in the information processing apparatus according to the first embodiment of the invention;
Fig. 3 is a flowchart showing a flow of the operation of a mail reception (2) in the information processing apparatus according to the first embodiment of the invention;
Fig. 4 is a flowchart showing a flow of the operation of the mail reception (2) in an information processing apparatus according to the second embodiment of the invention; and
Fig. 5 is a flowchart showing a flow of the operation of the mail reception (2) in an information processing apparatus according to the third embodiment of the invention.

### DETAILED DESCRIPTION OF THE PREFERRED EMBODIMENTS

Each embodiment of the invention will now be described hereinbelow with reference to the drawings.

### (First embodiment)

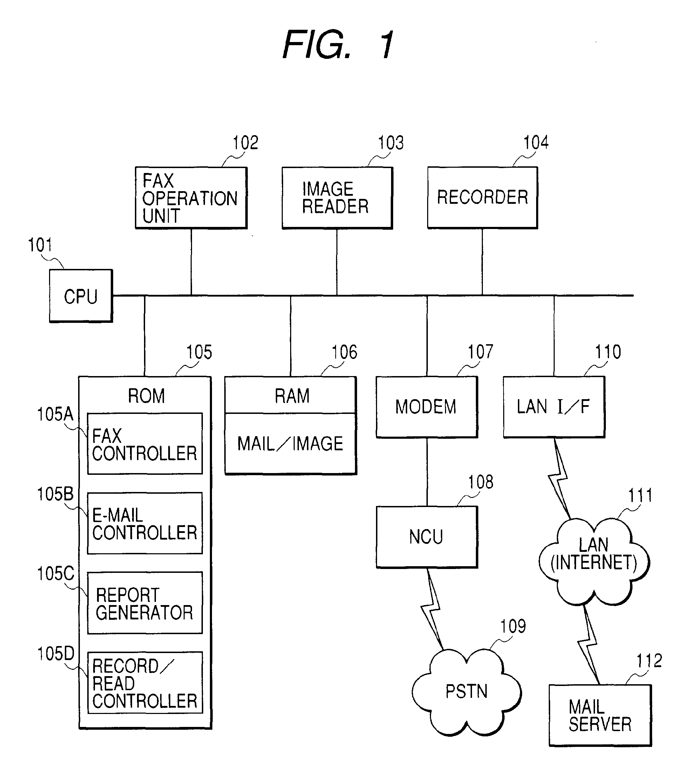

The first embodiment of the invention will be first described with reference to Figs. 1 to 3.

Fig. 1 is a block diagram showing a construction of an Internet facsimile apparatus as an information processing apparatus according to the embodiment. In the diagram, reference numeral 101 denotes a CPU (Central Processing Unit) for controlling the whole Internet facsimile apparatus; 102 a FAX (facsimile) operation unit which is constructed by an LCD (Liquid Crystal Display), a key panel for inputting, a speaker, and the like and realizes a user I/F (interface) of the inputting operation or the like such as communication, recording, or the like of the facsimile apparatus; 103 an image reader for reading an image of an original which is facsimile-transmitted; 104 a recorder for outputting a text of received E-mail, image data annexed to the E-mail, various reports, or the like; and 105 an ROM (Read Only Memory) in which a control program and data of the Internet facsimile apparatus have been stored. A program to control a FAX controller (facsimile transmission and reception controller) 105A, an E-mail controller (E-mail transmission and reception controller) 105B, a report generator (report generation controller) 105C, a record/read controller 105D for controlling the recording/reading operations, a user I/F, and the like, etc. has been stored in the ROM 105.

Reference numeral 106 denotes a RAM (Random Access Memory) for storing various information of the Internet facsimile apparatus. Communication administration information, image data, and the like which are generated upon transmission and reception have been stored in the RAM 106. Reference numeral 107 denotes a MODEM (modem) as a modulating/demodulating circuit for performing the transmission and reception of the Internet facsimile apparatus to/from a PSTN (Public Line) 109; 108 an NCU (Network Control Unit) for the PSTN 109; 110 an LAN I/F (interface) for connecting to an LAN (Local Area Network or Internet) 111; and 112 a mail server connected through the LAN (or Internet) 111.

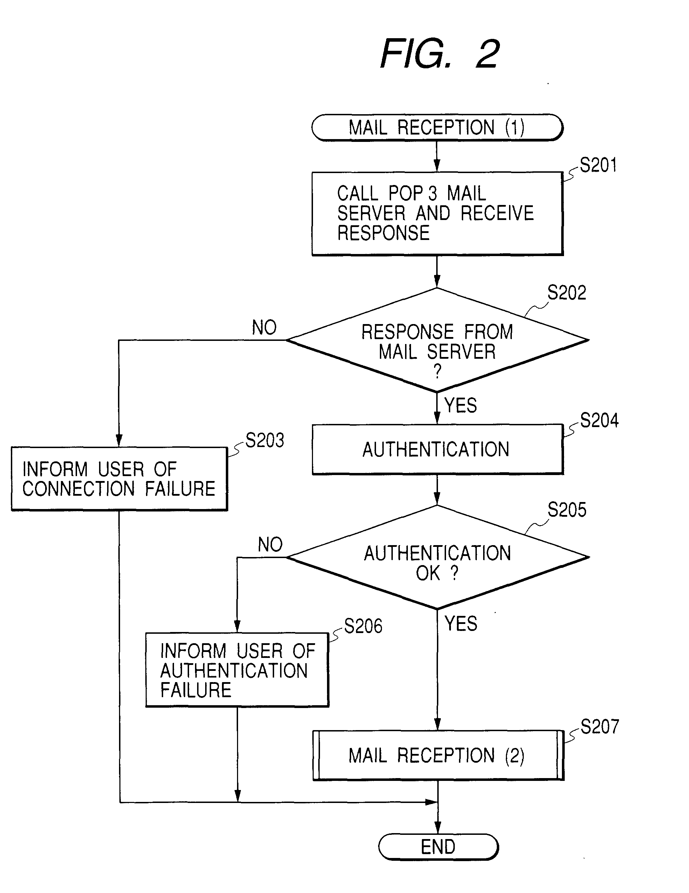

The reception processing operation of the E-mail using the Internet facsimile apparatus according to the embodiment will now be described with reference to Fig. 2.

The receiving process of the E-mail using the Internet facsimile apparatus according to the embodiment is executed by using POP3 (Post Office Protocol Version 3: protocol for receiving mail on an SMTP server) to a mail box of the mail server 112.

Fig. 2 is a flowchart showing a flow of the operation of a mail reception (1) in the Internet facsimile apparatus according to the embodiment.

First, in step S201, on a TCP connection (port No. 110) of the mail server 112 of POP3, communication of a client server type is started and the apparatus enters a state of waiting for reception of a response.

Subsequently, in step S202, whether the apparatus could successfully be connected to the mail server 112 of POP3 or not (whether a response from the mail server 112 of POP3 has been returned or not) is discriminated. If it is determined that the connection to the mail server 112 of POP3 failed (the response from the mail server 112 of POP3 is not returned), the processing routine advances to step S203. If it is determined that the connection to the mail server 112 of POP3 is successful (the response from the mail server 112 of POP3 was returned), the processing routine advances to step S204.

In step S203, for example, the user is informed of a message such as "connection to the mail server 112 of POP3 failed" by an output of a communication result report. After that, the reception processing operation of the present mail is finished.

In step S204, the mail server 112 of POP3 is authenticated. Specifically speaking, a mail box name is designated by a USER command. If the response of +OK is returned, a password of the mail box of the mail server 112 of POP3 is designated by a PASS command. If the response of +OK is returned, a result of the authentication is OK. If a response of -ERR is returned from the mail server 112 of POP3, the authentication result is NG. In the following steps, if the response from the mail server 112 of POP3 is - ERR, information indicating that the communication is NG is recorded as communication administration information. Contents thereof are outputted by the communication result report, an LCD at the time of displaying a communication history, a voice message at the end of the communication, or the like, thereby informing the user of such information.

Subsequently, in step S205, whether the authentication result in step S204 is OK or not is discriminated. If the authentication result is not OK, step S206 follows. If the authentication result is OK, step S207 follows.

In step S206, for example, the user is informed of a message such as "authentication of the mail server 112 of POP3 failed" by an output of the communication result report, the LCD at the time of displaying the communication history, the voice message at the end of the communication, or the like. After that, the reception processing operation of the present mail is finished.

In step S207, a reception (2) of the mail is executed. After that, the reception processing operation of the present mail is finished.

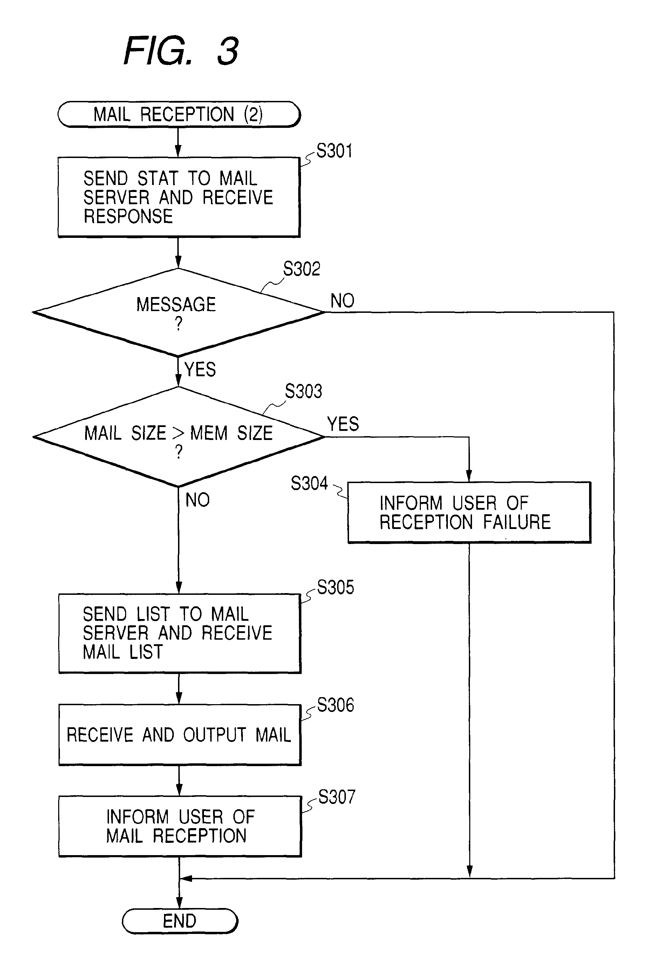

The operation of the mail reception (2) in step S207 will now be described with reference to Fig. 3.

Fig. 3 is a flowchart showing a flow of the operation of the mail reception (2) after the connection to and authentication of the mail server 112.

First, in step S301, an STAT command is sent to the mail server 112 and the information of the mail box of the mail server 112 is obtained. A mail list and a total size of mails are obtained by the +OK response.

Subsequently, in step S302, the presence or absence of a message is discriminated. If the number of messages is equal to 1 or more, it is determined that the mail exists, and step S303 follows. If the number of messages is equal to 0, it is determined that no mail exists, and the reception processing operation of the present mail is finished.

In step S303, whether the total size of mails exceeds a memory area size for the reception mail of the Internet facsimile apparatus or not is discriminated. If it is determined that the total size of mails exceeds the reception memory size, step S304 follows. If it is determined that the total size of mails does not exceed the reception memory size, step S305 follows.

In step S304, for example, the user is informed of a message such as "the reception of ... mails failed because of memory-full ..." by an output of the communication result report, LCD, speaker, or the like. After that, the reception processing operation of the present mail is finished. This message is stored into the communication administration information with respect to the mails which could not be received.

In step S305, an LIST command is sent to the mail server 112 and a list of mails in the mail box of the mail server 112 is obtained. The mail server 112 returns the message number and the size as information.

In step S306, all of the mails are received from the mail server 112 and the received mails are outputted and stored into the communication administration information with respect to the received mails. The reception of each mail is executed by the following procedure.

An RETR "message number" is sent, the mail is received by the response (+OK) from the mail server 112, and the mail is deleted from the mail server 112 by sending a DELE command. By repeating the above operations the number of times as many as the number of mails in the main box, all of the mails are received.

In step S307, for example, the user is informed of a message such as "... mails were received" by an output of the communication result report, LCD, speaker, or the like. After that, the reception processing operation of the present mail is finished.

As described in detail above, according to the Internet facsimile apparatus as an information processing apparatus of the embodiment, the apparatus is connected to the mail server 112 by POP3, when the mails are received, the size and mail list in the mail box are obtained by the STAT request and the obtained size and mail list are compared with the memory capacity for mail reception of the apparatus itself. If the size of mail box exceeds the memory capacity of the apparatus itself, the communication result report describing the number of mails which cannot be received is outputted, thereby informing the user of the fact that the reception of the mails failed. The mail size per mail is obtained by an LIST request. The mail which does not exceed the memory capacity of the apparatus itself is received and outputted. With respect to the mail which exceeds the memory capacity of the apparatus itself, the communication result report describing that the mails cannot be received is outputted, thereby making it possible to inform the user of the number of mails which could not be received.

That is, if the receivable memory capacity is small due to the mails or facsimile images which have already been accumulated, by informing the user of the fact that the facsimile apparatus is in the memory-full state by the communication result report which is outputted, it is possible to promote the user to delete the received mails or facsimile images accumulated in the memory.

The facsimile apparatus which is friendly to the user can be provided by preparing user informing means such as report, LCD, speaker, or the like so that the number of unreceivable mails can be confirmed.

A burden on the mail server 112 can be reduced by deleting the unreceivable mails from the mail server 112.

### (Second embodiment)

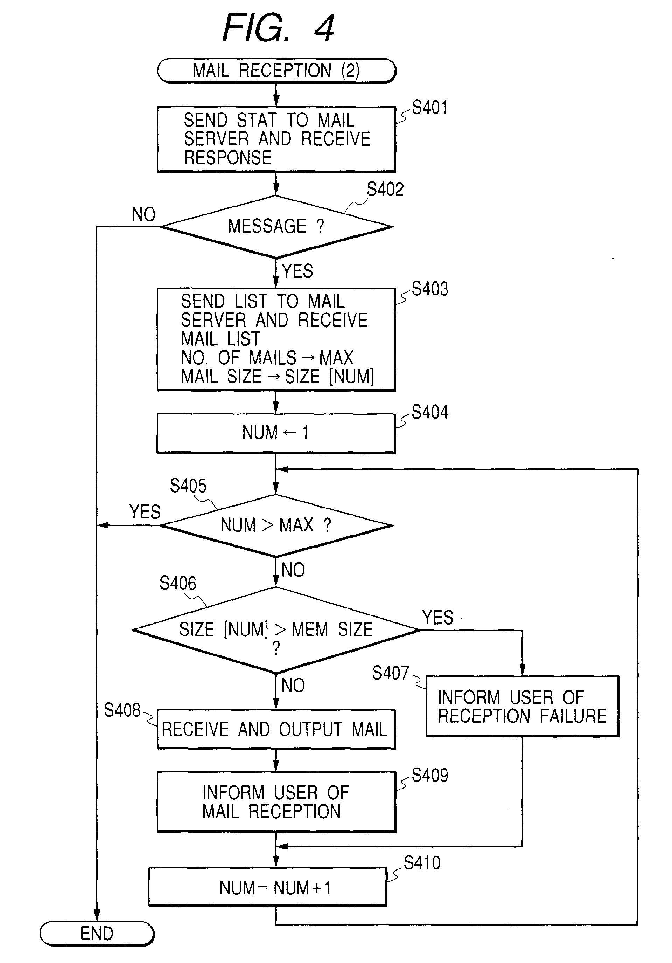

The second embodiment of the invention will now be described with reference to Fig. 4.

Since a fundamental construction of the Internet facsimile apparatus as an information processing apparatus of the embodiment is substantially the same as that of Fig. 1 according to the foregoing first embodiment, it will be explained also with reference to Fig. 1.

Since a flow of the operation of the mail reception (1) in the information processing apparatus of the embodiment is substantially the same as that of Fig. 2 according to the foregoing first embodiment, its explanation is omitted here and only the operation peculiar to the second embodiment will be explained.

In the embodiment, a point different from the first embodiment relates to a flow of the operation of the mail reception (2).

Fig. 4 is a flowchart showing a flow of the operation of the mail reception (2) in the information processing apparatus according to the second embodiment. Since the processes in steps S401 and S402 in Fig. 4 are the same as those in steps S301 and S302 in Fig. 3 in the first embodiment, their descriptions are omitted and only the processing steps peculiar to the embodiment will be described.

In step S403, the LIST command is sent to the mail server 112 and the list of the mails in the mail box is obtained. The message number and the size of mail are obtained from the mail server 112. The mail list is stored into a variable "MAX". The size information is stored as an array of SIZE [message number].

Subsequently, in step S404, "1" is substituted into a variable "Num" which is used as an index. In step S405, whether the variable "Num" which is used as an index exceeds "MAX" or not is discriminated. If it is determined that the variable "Num" which is used as an index exceeds "MAX", the reception processing operation of the present mail is finished. If it is determined that the variable "Num" which is used as an index does not exceed "MAX", step S406 follows. Whether SIZE[Num] exceeds the reception memory size or not is discriminated. If it is determined that SIZE[Num] exceeds the reception size, step S407 follows. If it is determined that SIZE[Num] does not exceed the reception memory size, step S408 follows.

In step S407, for example, the user is informed of a message such as "the reception of mails failed because of memory-full" by an output of the reception result report, LCD, speaker, or the like.

In step S408, RETR [message number: Num] is sent and the mail regarding the message number of "Num" is received from the mail server 112. The received mail is outputted from the recorder 104 in Fig. 1 and the mail is deleted from the mail server 112 by DELE [message number: Num]. After that, step S409 follows.

In step S409, for example, the user is informed of a message such as "mail reception is OK" by an output of the communication result report or the like. After that, step S410 follows.

In step S410, the index "Num" is increased by "1". After that, the processing routine is returned to step S405.

Other construction and operation in the embodiment are substantially the same as those in the foregoing first embodiment.

### (Third embodiment)

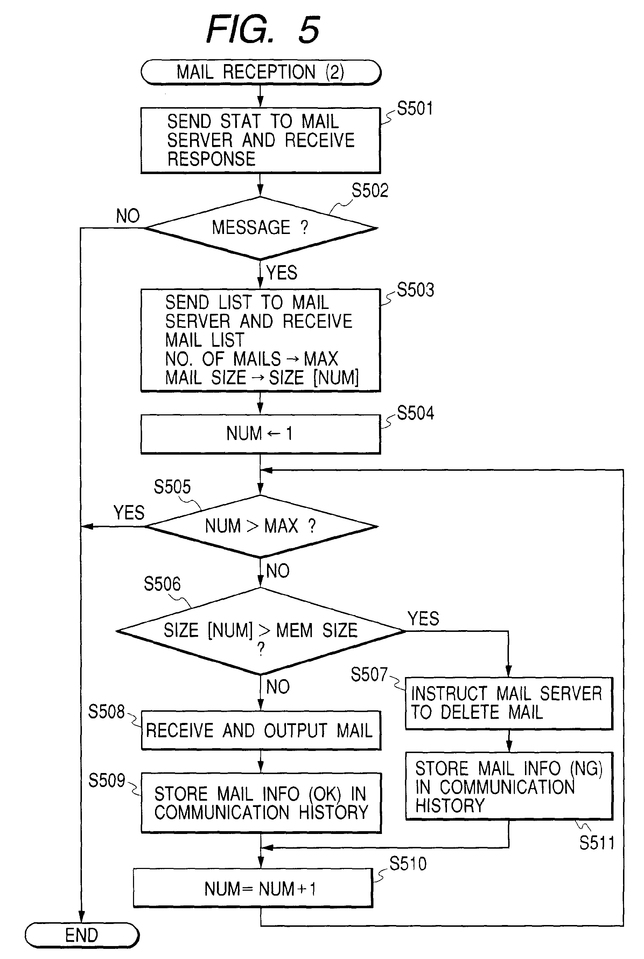

The third embodiment of the invention will now be described with reference to Fig. 5.

Since a fundamental construction of the Internet facsimile apparatus as an information processing apparatus of the embodiment is substantially the same as that of Fig. 1 according to the foregoing first embodiment, it will be explained also with reference to Fig. 1.

Since a flow of the operation of the mail reception (1) in the information processing apparatus of the embodiment is substantially the same as that of Fig. 2 according to the foregoing first embodiment, its explanation is omitted here and only the operation peculiar to the third embodiment will be explained.

In the embodiment, a point different from the first embodiment relates to a flow of the operation of the mail reception (2).

Fig. 5 is a flowchart showing a flow of the operation of the mail reception (2) in the information processing apparatus according to the third embodiment. Since the processes in steps S501 to S505, S508, and S510 in Fig. 5 are the same as those in steps S401 to S405, S408, and S410 in Fig. 4 in the second embodiment, their descriptions are omitted and only the processing steps peculiar to the embodiment will be described.

In step S506, whether SIZE[Num] exceeds the reception size or not is discriminated. Although the maximum reception size can be stored as a parameter of a fixed value, it is more preferable to store the maximum reception size into the RAM 106 and enable it to be rewritten from the FAX operation unit 102. If it is determined that SIZE[Num] exceeds the reception size, step S507 follows. If it is determined that SIZE[Num] does not exceed the reception size, step S508 follows.

In step S507, RETR [message number: Num] is sent with respect to the mail exceeding the reception size from the mail server 112, only header information of the mail regarding the message number of "Num" is received from the mail server 112, and after that, the mail exceeding the reception size is deleted from the mail server 112 by DELE [message number: Num].

In step S511, information which is obtained from the header information of the mail received in step S507 is stored into the communication history. At this time, information showing that the size of mail is larger than the maximum reception side, information showing that this mail has been deleted from the mail server 112, and further, the size information of the E-mail are also stored.

In step S509, information regarding the mail which was normally received in step S508 is stored into the communication history.

Since the contents in the communication history can be displayed by the FAX operation unit 102 or recorded by the recorder 104, even if a plurality of received mails are accumulated in the mail server 112, whether each received mail has normally been received or has been deleted as being unreceivable can be discriminated.

Other construction and operation of the embodiment are substantially the same as those in the foregoing first embodiment.

The invention can be applied to a system constructed by a plurality of apparatuses (for example, a host computer, an interface, a reader, a printer, and the like) or to an apparatus comprising one equipment (for example, a copying apparatus, a facsimile apparatus, or the like).

Naturally, the objects of the invention are accomplished by a method whereby a memory medium in which program codes of software to realize the functions of the embodiments mentioned above have been recorded is supplied to a system or an apparatus and a computer (or a CPU, an MPU, or the like) of the system or apparatus reads out the program codes stored in the memory medium and executes processes based on the program codes.

In this case, the program codes themselves read out from the memory medium realize the functions of the embodiments mentioned above, and the memory medium in which the program codes have been stored constructs the invention.

As a memory medium for supplying the program codes, for example, it is possible to use a floppy disk, a hard disk, a magnetooptic disk, a CD-ROM, a CD-R, a CD-RW, a DVD-ROM, a DVD-RAM, a DVD-RW, a DVD+RW, a magnetic tape, a non-volatile memory card, an ROM, or the like.

The invention incorporates not only a case where a computer executes the read-out program codes, so that the functions of the embodiments mentioned above are realized, but also a case where an OS (Operating System) or the like which operates on a computer executes a part or all of the actual processes on the basis of instructions of the program codes and the functions of the embodiments mentioned above are realized by those processes.

Further, the invention also incorporates a case where the program codes read out from the memory medium are written into a memory provided for a function expansion board inserted into a computer or a function expansion unit connected to a computer, after that, a CPU or the like provided for the function expansion board or function expansion unit executes a part or all of the actual processes on the basis of the instructions of the program codes, and the functions of the embodiments mentioned above are realized by those processes.

According to the invention as described above, when the reception memory is small due to the mail facsimile image which has already been accumulated, by informing the user of the fact that the facsimile apparatus is in the memory-full state by the communication result report which is outputted, the user can be promoted to delete the reception mails or facsimile images stored in the memory.

The information processing apparatus which is friendly to the user can be provided by preparing the user informing means so that the number of unreceivable mails can be confirmed.

A burden on the mail server can be reduced by decreasing the number of unreceivable mails from the mail server.

## Claims

1. A communicating apparatus comprising:
receiving means for receiving E-mails stored in a mail box provided on an E-mail server;
obtaining means for obtaining a size of E-mail stored in said mail box;
memory means for storing a maximum value of the size of one E-mail which is received by said receiving means;
discriminating means for comparing the size of E-mail obtained by said obtaining means with said maximum value, thereby discriminating whether the E-mail is receivable or not; and
control means for sending an instruction for deleting the E-mail which was determined to be unreceivable by said discriminating means to said E-mail server and storing the fact that said E-mail has been deleted into a communication history.

2. An apparatus according to claim 1, wherein said control means receives only header information of the E-mail which was determined to be unreceivable by said discriminating means, and stores information that is obtained from the received header information into the communication history.

3. An apparatus according to claim 1, wherein said control means stores size information of the E-mail which was determined to be unreceivable by said discriminating means into the communication history.

4. An apparatus according to claim 1, wherein after the E-mail which was determined to be receivable by said discriminating means is received, said control means stores information obtained from the received E-mail into the communication history.

5. An apparatus according to claim 1, wherein if a plurality of E-mails have been stored in said mail box, said control means allows said discriminating means to discriminate whether the E-mail is receivable or not with respect to each of said plurality of E-mails.

6. An apparatus according to claim 1, further comprising recording means,
and wherein after the E-mail which was determined to be receivable by said discriminating means is received, said control means allows said recording means to record said E-mail.

7. A communicating apparatus comprising:
obtaining means for obtaining size information of each of a plurality of E-mails stored in a mail box provided on an E-mail server;
selecting means for selecting the receivable E-mail on the basis of the size information obtained by said obtaining means; and
receiving means for receiving the E-mail selected by said selecting means from said E-mail server.

8. An apparatus according to claim 7, wherein said selecting means compares a maximum value of a size of one E-mail which has previously been stored with the size information obtained by said obtaining means, thereby discriminating whether said E-mail is receivable or not.

9. An apparatus according to claim 7, further comprising deletion instructing means for sending an instruction for deleting the E-mails which were not selected by said selecting means from said mail box to said E-mail server.

10. A communicating method comprising:
a receiving step of receiving E-mails stored in a mail box provided on an E-mail server;
an obtaining step of obtaining a size of E-mail stored in said mail box;
a discriminating step of comparing the size of E-mail obtained by said obtaining step with a maximum value of the size of one E-mail which has previously been stored, thereby discriminating whether the E-mail is receivable or not; and
a control step of sending an instruction for deleting the E-mail which was determined to be unreceivable by said discriminating step to said E-mail server and storing the fact that said E-mail has been deleted into a communication history.

11. A method according to claim 10, wherein in said control step, only header information of the E-mail which was determined to be unreceivable by said discriminating step is received and information that is obtained from the received header information is stored into the communication history.

12. A method according to claim 10, wherein in said control step, size information of the E-mail which was determined to be unreceivable by said discriminating step is stored into the communication history.

13. A method according to claim 10, wherein in said control step, after the E-mail which was determined to be receivable by said discriminating step is received, information obtained from the received E-mail is stored into the communication history.

14. A method according to claim 10, wherein if a plurality of E-mails have been stored in said mail box, said control step allows said discriminating step to discriminate whether the E-mail is receivable or not with respect to each of said plurality of E-mails.

15. A method according to claim 10, wherein in said control step, after the E-mail which was determined to be receivable by said discriminating step is received, said E-mail is recorded.

16. A communicating method comprising:
an obtaining step of obtaining size information of each of a plurality of E-mails stored in a mail box provided on an E-mail server;
a selecting step of selecting the receivable E-mail on the basis of the size information obtained by said obtaining step; and
a receiving step of receiving the E-mail selected by said selecting step from said E-mail server.

17. A method according to claim 16, wherein in said selecting step, a maximum value of a size of one E-mail which has previously been stored is compared with the size information obtained by said obtaining step, thereby discriminating whether said E-mail is receivable or not.

18. A method according to claim 16, further comprising a deletion instructing step of sending an instruction for deleting the E-mails which were not selected by said selecting step from said mail box to said E-mail server.

19. A computer program which is executed by a computer of an information processing apparatus having a communicating function, comprising:
a receiving step of receiving E-mails stored in a mail box provided on an E-mail server;
an obtaining step of obtaining a size of E-mail stored in said mail box;
a discriminating step of comparing the size of E-mail obtained by said obtaining step with a maximum value of the size of one E-mail which has previously been stored, thereby discriminating whether the E-mail is receivable or not; and
a control step of sending an instruction for deleting the E-mail which was determined to be unreceivable by said discriminating step to said E-mail server and storing the fact that said E-mail has been deleted into a communication history.

20. A computer program which is executed by a computer of an information processing apparatus having a communicating function, comprising:
an obtaining step of obtaining size information of each of a plurality of E-mails stored in a mail box provided on an E-mail server;
a selecting step of selecting the receivable E-mail on the basis of the size information obtained by said obtaining step; and
a receiving step of receiving the E-mail selected by said selecting step from said E-mail server.

21. A computer-readable memory medium which stores a computer program according to claim 19.

22. A computer-readable memory medium which stores a computer program according to claim 20.
